(19)

Europäisches
Patentamt
European
Patent Office
Office européen
des brevets

(11) **EP 3 202 937 A1**

(12) **EUROPEAN PATENT APPLICATION**
published in accordance with Art. 153(4) EPC

(43) Date of publication:
**09.08.2017 Bulletin 2017/32**

(21) Application number: **15846321.6**

(22) Date of filing: **08.09.2015**

(51) Int Cl.:
*C22C 38/00* (2006.01)          *C22C 38/34* (2006.01)
*C22C 38/54* (2006.01)          *F16B 35/00* (2006.01)
*C21D 8/06* (2006.01)          *C21D 9/00* (2006.01)

(86) International application number:
**PCT/JP2015/075416**

(87) International publication number:
**WO 2016/052093 (07.04.2016 Gazette 2016/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **30.09.2014 JP 2014201945**

(71) Applicant: **Kabushiki Kaisha Kobe Seiko Sho
(Kobe Steel, Ltd.)
Kobe-shi, Hyogo 651-8585 (JP)**

(72) Inventors:
• **MATSUMOTO, Yosuke
  Kobe-shi,
  Hyogo 657-0863 (JP)**
• **CHIBA, Masamichi
  Kobe-shi,
  Hyogo 657-0863 (JP)**

(74) Representative: **Müller-Boré & Partner
Patentanwälte PartG mbB
Friedenheimer Brücke 21
80639 München (DE)**

(54) **STEEL FOR BOLTS, AND BOLT**

(57)    To provide a steel for bolts with excellent delayed fracture resistance and cold forgeability while maintaining the strength as a steel material, and also to provide a bolt produced from such a steel for bolts.

The steel for bolts according to the present invention includes, in percent by mass: 0.20 to 0.40% of C; 1.5 to 2.5% of Si; 0.20 to 1.5% of Mn; more than 0% and 0.03% or less of P; more than 0% and 0.03% or less of S; 0.05 to 1.5% of Cr; 0.01 to 0.10% of Al; 0.0003 to 0.01% of B; 0.002 to 0.020% of N; and one or two elements selected from the group consisting of 0.02 to 0.10% of Ti and 0.02 to 0.10% of Nb, with the balance being iron and inevitable impurities.

EP 3 202 937 A1

**Description**

Technical Field

The present invention relates to a steel for bolts used for automobiles, various industrial machines, and the like, and a bolt produced using the steel for bolts. In particular, the present invention relates to a steel for bolts and a bolt that exhibit excellent delayed fracture resistance and cold forgeability, even with a tensile strength of 1100 MPa or higher.

Background Art

Delayed fracture takes place in a steel material after a certain period of time has elapsed since the application of stress to the steel material. The cause for such a delayed fracture is difficult to identify as various possible causes are considered to be complexly intertwined with one another. Nevertheless, in general, it is commonly recognized that the delayed fracture is associated with a hydrogen embrittlement phenomenon.

Meanwhile, factors affecting the delayed fracture phenomenon have been recognized and include a tempering temperature, the microstructure of a material, the hardness of a material, a grain size, the presence of various alloy elements, and the like. However, means for preventing the delayed fracture have not been established yet, and in practice, various methods are proposed through trial and error.

High-strength steel materials and bolts with excellent properties against the delayed fracture (hereinafter referred to as a "delayed fracture resistance") have been previously proposed. For example, Patent Documents 1 to 3 disclose techniques regarding high-strength steel materials and bolts with excellent delayed fracture resistance. As part of the techniques, the concentration of nitrogen in a superficial layer of the steel is increased to ensure the excellent delayed fracture resistance. However, these techniques have problems that corrosion would progress under a usage environment of bolts and the delayed fracture resistance might be significantly degraded when a nitrided layer drops off. In addition, the techniques require special heat treatment to form the nitrided layer and still encounter issues in terms of the productivity and cost.

Conventional Art Document

Patent Document

Patent Document 1: WO 2011/111872 A
Patent Document 2: JP 2009-299180 A
Patent Document 3: JP 2009-299181 A

Disclosure of the Invention

Problems to be Solved by the Invention

The present invention has been made in view of the foregoing circumstances. It is an object of the present invention to provide a steel for bolts with excellent delayed fracture resistance and cold forgeability while maintaining the strength as a steel material, and also to provide a bolt producing from such a steel for bolts.

Means for Solving the Problems

A steel for bolts according to the present invention includes, in percent by mass: 0.20 to 0.40% of C; 1.5 to 2.5% of Si; 0.20 to 1.5% of Mn; more than 0% and 0.03% or less of P; more than 0% and 0.03% or less of S; 0.05 to 1.5% of Cr; 0.01 to 0.10% of Al; 0.0003 to 0.01% of B; 0.002 to 0.020% of N; and one or two elements selected from the group consisting of 0.02 to 0.10% of Ti and 0.02 to 0.10% of Nb, with the balance being iron and inevitable impurities.

The steel for high-strength bolts in the present invention further includes, as appropriate:

(a) one or more elements selected from the group consisting of more than 0% and 0.5% or less of Cu, more than 0% and 1.0% or less of Ni, and more than 0% and 0.5% or less of Sn;
(b) more than 0% and6 1.5% or less of Mo; and
(c) one or more elements selected from the group consisting of more than 0% and 0.5% or less of V, more than 0% and 0.5% or less of W, more than 0% and 0.3% or less of Zr, more than 0% and 0.01% or less of Mg, and more than 0% and 0.01% or less of Ca, which features are useful. With this structure, the properties of the steel for high-strength bolts can be further improved.

The present invention includes a bolt that has the chemical composition mentioned above and also satisfies a relationship given by the following formula (1):

$$(L/L0) \times 100 \leq 60 \qquad (1)$$

where L is a total length of precipitates, each having a thickness of 50 nm or more, formed in an austenite grain boundary, and L0 is a length of the austenite grain boundary.

The bolt according to the present invention does not include a layer subjected to a nitriding treatment. The bolt in the present invention preferably has an austenite grain size number of 8 or more.

Effects of the Invention

The present invention can achieve both the cold forgeability and delayed fracture resistance of the steel for bolts at high levels as the chemical composition of the steel is appropriately controlled.

Mode for Carrying Out the Invention

The inventors have pursued steels for bolts that can achieve both the adequate cold forgeability and delayed fracture resistance, particularly, from the viewpoint of appropriately controlling their chemical compositions. As a result, it has found that the steel for bolts that fulfills the above-mentioned object can be achieved by setting a Si content relatively high to decrease the amount of precipitates formed in the grain boundaries as much as possible, while appropriately controlling the chemical composition. In this way, the present invention has been completed.

Reasons for specifying the chemical composition of the steel for bolts according to the present invention will be as follows.

C: 0.20 to 0.40%

Carbon (C) is an element effective in ensuring the strength of steel. To ensure a target tensile strength of 1100 MPa or higher, the C content needs to be 0.20% or more. The lower limit of the C content is preferably 0.23% or more, and more preferably 0.25% or more. However, any excessive C content degrades the delayed fracture resistance. Thus, the upper limit of the C content is set at 0.40% or less. The upper limit of the C content is preferably 0.35% or less, and more preferably 0.32% or less.

Si: 1.5 to 2.5%

Silicon (Si) is an element effective in serving as a deoxidizing agent and ensuring the strength of a steel. Si suppresses the precipitation of coarse cementite that affects a G value to be mentioned later and exhibits the effect of improving the delayed fracture resistance. To effectively exhibit these effects, the Si content needs to be 1.5% or more. The lower limit of the Si content is preferably 1.6% or more, and more preferably 1.7% or more. On the other hand, any excessive Si content degrades the cold forgeability. Thus, the upper limit of the Si content needs to be 2.5% or less. The upper limit of the Si content is preferably 2.2% or less, and more preferably 2.0% or less.

Mn: 0.20 to 1.5%

Manganese (Mn) is an element effective in ensuring the strength of a steel while exhibiting the function of suppressing the formation of FeS, which would degrade the delayed fracture resistance, by forming a compound with S. To exhibit these effects, the Mn content needs to be 0.20% or more. The lower limit of Mn content is preferably 0.30% or more, and more preferably 0.40% or more. On the other hand, any excessive Mn content degrades the delayed fracture resistance. Thus, the upper limit of the Mn content needs to be 1.5% or less. The upper limit of Mn content is preferably 1.3% or less, and more preferably 1.1% or less.

P: more than 0% and 0.03% or less

Phosphorus (P) is an impurity element that is concentrated at grain boundaries to lower the toughness and ductility of a steel, thus deteriorating the delayed fracture resistance. The P content is set at 0.03% or less, thereby significantly improving the delayed fracture resistance. The P content is preferably 0.015% or less, and more preferably 0.010% or less. The P content is preferably decreased as much as possible. It is difficult to set the P content at zero in terms of manufacturing. For this reason, the P content is approximately 0.003%.

S: more than 0% and 0.03% or less

Like P, sulfur (S) is also an impurity element that is concentrated at grain boundaries to lower the toughness and ductility of a steel, thus deteriorating the delayed fracture resistance. The S content is set at 0.03% or less, thereby significantly improving the delayed fracture resistance. The S content is preferably 0.015% or less, and more preferably 0.010% or less. The S content is preferably decreased as much as possible. It is difficult to set the S content at zero in terms of manufacturing. For this reason, the S content is approximately 0.003%.

Cr: 0.05 to 1.5%

Chromium (Cr) is an element effective in ensuring the delayed fracture resistance while improving the corrosion resistance of a steel. To exhibit these effects, the Cr content needs to be 0.05% or more. The lower limit of the Cr content is preferably 0.10% or more, and more preferably 0.20% or more. On the other hand, any excessive Cr content forms coarse carbides, degrading the cold forgeability, while leading to an increase in cost. Thus, the upper limit of the Cr content needs to be 1.5% or less. The upper limit of the Cr content is preferably 1.3% or less, and more preferably 1.0% or less.

Al: 0.01 to 0.10%

Aluminum (Al) is an element effective in serving as a deoxidizing agent and in refining crystal grains and improving the cold forgeability by forming a nitride. To exhibit these effects, the Al content needs to be 0.01% or more. The lower limit of the Al content is preferably 0. 03% or more, and more preferably 0.04% or more. On the other hand, any excessive Al content forms coarse nitrides, thus degrading the cold forgeability. Thus, the upper limit of the Al content needs to be 0.10% or less. The upper limit of the Al content is preferably 0.08% or less, and more preferably 0.06% or less.

B: 0.0003 to 0.01%

Boron (B) is an element that is effective in improving hardenability of a steel, and in improving the delayed fracture resistance by being dispersed on the prior austenite grain boundaries to suppress the incrassating of segregated elements, such as P and S, at grain boundaries, thereby cleaning the grain boundaries. To exhibit these effects, the B content needs to be 0.0003% or more. The lower limit of the B content is preferably 0.0008% or more, and more preferably 0.001% or more. On the other hand, any excessive B content forms coarse compounds, degrading the delayed fracture resistance. Thus, the upper limit of the B content needs to be 0.01% or less. Specifically, the upper limit of B is preferably 0.005% or less, and more preferably 0.003% or less.

N: 0.002 to 0.020%

Nitrogen (N) is an element that forms a nitride with Al, Ti, and Nb, and thereby is effective in refining crystal grains. To exhibit this effect, the N content needs to be 0.002% or more. The lower limit of N content is preferably 0.003% or more, and more preferably 0.0035% or more. On the other hand, any excessive N content leads to an increase in the amount of N in a solid-solution state without forming compounds, thereby degrading the cold forgeability. Thus, the upper limit of the N content is set at 0.020% or less. Specifically, the upper limit of N is preferably 0.010% or less, and more preferably 0.008% or less.

One or two elements selected from the group consisting of Ti: 0.02 to 0.10%, and Nb: 0.02 to 0.10%

Titanium (Ti) and niobium (Nb) are elements that bind with N to form nitrides, and thereby are effective in refining crystal grains. The formation of nitrides including Ti or Nb makes it difficult to form a nitride of B, which leads to an increase in the amount of free B, thereby improving the hardenability of a steel. To exhibit these effects, the content of at least one of Ti and Nb needs to be 0.02% or more. The lower limit of each of the Ti content and the Nb content is preferably 0.03% or more, and more preferably 0.04% or more. On the other hand, any excessive Ti content and Nb content form coarse carbonitrides, thereby degrading the cold forgeability and the delayed fracture resistance. From this perspective, the upper limit of each of the Ti content and the Nb content is set at 0.10% or less. The upper limit of each of the Ti content and the Nb content is preferably 0.08% or less, and more preferably 0.06% or less.

Basic components of the steel for bolts according to the present invention have been described above, with the balance being substantially iron. Note that inevitable impurities are obviously allowed to be brought and contained in the steel, depending on the conditions, including raw materials, construction materials, manufacturing facilities, and the like.

It is also effective that the steel for bolts according to the present invention further includes the following elements as appropriate.

(a) One or more elements selected from the group consisting of more than 0% and 0.5% or less of Cu, more than 0% and 1.0% or less of Ni, and more than 0% and 0.5% or less of Sn

Copper (Cu), nickel (Ni), and tin (Sn) are elements effective in improving the delayed fracture resistance of a steel, while improving corrosion resistance of the steel. The effects of these elements are enhanced as their contents increase. However, any excessive content of each of these elements will cause inconveniences to be mentioned later. That is, any excessive Cu content saturates the above-mentioned effects, but reduces the hot rollability, thereby degrading the productivity of the steel. Furthermore, the cold forgeability and toughness might also be degraded. From these perspectives, the upper limit of the Cu content is preferably 0.5% or less. The upper limit of the Cu content is more preferably 0.4% or less, and still more preferably 0.35% or less.

Any excessive Ni content saturates the above-mentioned effects, leading to an increase in the manufacturing cost. From this perspective, the upper limit of the Ni content is preferably 1.0% or less. Specifically, the upper limit of the Ni content is more preferably 0.8% or less, and still more preferably 0.7% or less.

Furthermore, any excessive Sn content saturates the above-mentioned effects, leading to an increase in the manufacturing cost. From this perspective, the upper limit of the Sn content is preferably 0.5% or less. Specifically, the upper limit of the Sn content is more preferably 0.4% or less, and still more preferably 0.3% or less.

To exhibit the above-mentioned effects, the lower limit of the Cu content is preferably 0.03% or more, more preferably 0.1% or more, and still more preferably 0.15% or more. The lower limit of the Ni content is preferably 0.1% or more, more preferably 0.2% or more, and still more preferably 0.3% or more. The lower limit of Sn content is preferably 0.03% or more, more preferably 0.1% or more, and still more preferably 0.15% or more.

(b) Mo: more than 0% and 1.5% or less

Molybdenum (Mo) is an element effective in enhancing the strength of a steel and in improving the delayed fracture resistance by forming fine precipitates in the steel. These effects are enhanced as the Mo content increases. However, any excessive Mo content worsens the manufacturing cost. Thus, the upper limit of Mo content is preferably 1.5% or less, more preferably 1.2% or less, and still more preferably 1.1% or less. To exhibit the above-mentioned effects, the lower limit of the Mo content is preferably 0.03% or more, more preferably 0.10% or more, and still more preferably 0.15% or more.

(c) one or more elements selected from the group consisting of: more than 0% and 0.5% or less of V, more than 0% and 0.5% or less of W, more than 0% and 0.3% or less of Zr, more than 0% and 0.01% or less of Mg, and more than 0% and 0.01% or less of Ca

Vanadium (V), tungsten (W), zirconium (Zr), magnesium (Mg), and calcium (Ca) form carbonitrides to prevent austenite crystal grains from being coarsened during heating for quenching. V, W, Zr, Mg, and Ca are effective in improving the toughness and ductility, as well as the delayed fracture resistance. The effects of these elements are enhanced as their contents increase. However, any excessive content of each of these elements will cause inconveniences to be mentioned later. That is, any excessive V content saturates the above-mentioned effects, leading to an increase in the manufacturing cost. From these perspectives, when V is contained, the upper limit of the V content is preferably 0.5% or less. The upper limit of V content is more preferably 0.3% or less, and still more preferably 0.2% or less.

Any excessive W content saturates the above-mentioned effects, leading to an increase in the manufacturing cost. From this perspective, when W is contained, the upper limit of the W content is preferably 0.5% or less, more preferably 0.3% or less, and still more preferably 0.2% or less.

Any excessive Zr content saturates the above-mentioned effects, leading to an increase in the manufacturing cost. From this perspective, when Zr is contained, the upper limit of the Zr content is preferably 0.3% or less, more preferably 0.2% or less, and still more preferably 0.1% or less.

Any excessive Mg content saturates the above-mentioned effects, leading to an increase in the manufacturing cost. From this perspective, when Mg is contained, the upper limit of the Mg content is preferably 0.01% or less, more preferably 0.007% or less, and still more preferably 0.005% or less.

Any excessive Ca content saturates the above-mentioned effects, leading to an increase in the manufacturing cost. From this perspective, when Ca is contained, the upper limit of the Ca content is preferably 0.01% or less, more preferably 0.007% or less, and still more preferably 0.005% or less.

To exhibit the above-mentioned effects, the lower limit of the V content is preferably 0.01% or more, more preferably 0.03% or more, and still more preferably 0.05% or more.

When W is contained, the lower limit of the W content is preferably 0.01% or more, more preferably 0.03% or more, and still more preferably 0.05% or more.

When Zr is contained, the lower limit of the Zr content is preferably 0.01% or more, more preferably 0.03% or more, and still more preferably 0.05% or more.

When Mg is contained, the lower limit of the Mg content is preferably 0.0003% or more, more preferably 0.0005% or more, and still more preferably 0.001% or more.

When Ca is contained, the lower limit of the Ca content is preferably 0.0003% or more, more preferably 0.0005% or more, and still more preferably 0.001% or more.

The steel for bolts having the above-mentioned chemical composition is heated at a temperature of 950°C or higher (hereinafter referred to as a "billet reheating temperature") during billet reheating before rolling, and then subjected to finish rolling at a temperature of 800 to 1000°C into a wire rod or steel bar shape, followed by cooling to a temperature of 600°C or lower at an average cooling rate of 3°C/sec or lower. The resultant microstructure after the rolling basically becomes a mixed microstructure of ferrite and pearlite. The above-mentioned conditions will be explained below. Note that in the steel for bolts in the present invention, the microstructure obtained after the rolling is not necessarily the mixed microstructure of ferrite and pearlite.

Billet Reheating Temperature: 950°C or higher

In the billet reheating, carbides, nitrides, and carbonitrides (hereinafter referred to as "carbide-nitride") of Ti and Nb, which are effective in refining crystal grains, needs to be solid-soluted into austenite. To this end, the billet reheating temperature is preferably 950°C or higher. When such a temperature is less than 950°C, the solid solution of the carbide-nitride becomes insufficient, and in the subsequent hot-rolling process, fine carbide-nitride of Ti and Nb are less likely to be formed, which reduces the effect of refining crystal grains in the quenching. This billet reheating temperature is preferably 1000°C or higher. Note that when the billet reheating temperature exceeds 1, 400°C, it is close to a melting temperature of the steel. Thus, the reheating temperature is preferably 1, 400°C or lower, more preferably 1300°C or lower, and still more preferably 1,250°C or lower.

Finish Rolling Temperature: 800 to 1,000°C

In the rolling, Ti or Nb solid-soluted during the billet reheating needs to be precipitated as fine carbide-nitride in the steel. Thus, the finish rolling temperature is preferably 1000°C or lower. The finish rolling temperature is more preferably 950 °C or lower. When the finish rolling temperature is higher than 1000°C, the carbide-nitride of Ti and Nb are less likely to be precipitated, which reduces the effect of refining crystal grains in the quenching.

On the other hand, when the finish rolling temperature is extremely low, a rolling force will be increased, or the surface defects will occur more often, which is not practical. Thus, the lower limit of the finish rolling temperature is preferably 800°C or higher. The finish rolling temperature is more preferably 850°C or higher. The term "finish rolling temperature" as used herein is defined as an average temperature of surfaces that can be measured with a radiation thermometer ahead of the final rolling path or ahead of a group of mill rolls.

Average Cooling Rate After Finish Rolling: 3°C/sec or lower

Cooling of the steel after the finish rolling preferably forms the mixed microstructure of ferrite and pearlite in order to improve the formability of bolt processing which is conducted later. To this end, the average cooling rate after the finish rolling is preferably set at 3°C/sec or lower, and the cooling is preferably performed at this cooling rate to at least 600°C. When the average cooling rate is higher than 3°C/sec, bainite or martensite is generated, significantly degrading the bolt formability. The average cooling rate is more preferably 2°C/sec or lower, and still more preferably 1°C/sec or lower.

The steel for bolts in the present invention may be subjected to spheroidizing annealing when bainite or martensite is generated during the hot-rolling.

After forming the steel into a bolt shape, quenching and tempering are performed to form a microstructure of tempered martensite. Consequently, the formed bolt can ensure a predetermined tensile strength and has excellent delayed fracture resistance. Appropriate conditions for the quenching and tempering at this time are as follows.

In heating for quenching, the heating temperature (hereinafter referred to as a "quenching temperature" in some cases) is preferably set at 850°C or higher to stably carry out an austenitizing treatment. However, when the heating is performed at a high temperature exceeding 950°C, the carbide-nitrides of Ti or Nb are melted to reduce a pinning effect, thereby coarsening crystal grains, degrading the delayed fracture resistance in some cases. Thus, to prevent the coarsening of the crystal grains, the quenching temperature is preferably 950°C or lower. Note that the upper limit of the quenching temperature is preferably 930°C or lower, and more preferably 920°C or lower. Note that the lower limit of the quenching temperature is more preferably 870°C or higher, and still more preferably 880°C or higher.

The quenched bolt has low toughness and ductility and cannot bear the usage as a bolt product as it is, and thus it needs a tempering process. For that reason, the tempering at a temperature of at least 300°C or higher is effective.

The bolt obtained in the present invention has no nitrided layer on its surface, but is controlled such that the rate of precipitates, each having a thickness of 50 nm or more, formed on the austenite grain boundaries of a bolt shaft part is set at 60% or less, thereby making it possible to further improve the delayed fracture resistance. That is, in formula (1) below, when G value (%) is a left-hand side value, i.e., a value of (L/L0) × 100, the G value is 60% or less. The bolt that has the chemical composition mentioned above and satisfies the relationship given by the following formula (1) has excellent delayed fracture resistance. The G value is more preferably 50% or lower, and still more preferably 40% or lower. The lower the lower limit of the G value, the more desirable it is. The G value is normally 10% or more. Note that the "precipitate" formed on the austenite grain boundaries of the bolt shaft part mainly includes cementite, but is not limited thereto and can also contain carbides or carbonitrides that contain Cr, Ti, Nb, Al, V, etc.,

$$(L/L0) \times 100 \leq 60 \qquad (1)$$

where L is a total length of precipitates, each having a thickness of 50 nm or more, precipitated in an austenite grain boundary, and L0 is a length of the austenite grain boundary.

To reduce the amount of precipitates on the austenite grain boundaries, the tempering temperature is important. By setting the tempering temperature at a temperature T (°C) represented by the following formula (2) or lower, the G value can be 60% or lower. Note that Ln indicates a natural logarithm, and [Si] is a Si content in % by mass in the steel.

$$T \ (°C) = 68.2 \times Ln[Si] + 480 \qquad (2)$$

In the bolts quenched and tempered on the above-mentioned conditions, preferably, the more highly refined the austenite crystal grains (i.e., prior austenite crystal grains), the more the delayed fracture resistance is improved. From this perspective, the austenite crystal grains at the bolt shaft part preferably have a grain size number of 8 or higher that is defined in accordance with JIS G 0551(2006). The grain size number is more preferably 9 or more, and still more preferably 10 or more.

This application claims priority on Japanese Patent Application No. No. 2014-201945, field on September 30, 2014, the disclosure of which is incorporated by reference herein.

Examples

The present invention will be more specifically described below by way of Examples, but is not limited to the following Examples. Various modifications can be made to these examples as long as they are adaptable to the above-mentioned and below-mentioned concepts and are included within the scope of the present invention.

Each type of steels A to L and A1 to R1 having chemical compositions shown in Tables 1 and 2 below was smelted, followed by rolling on conditions, including a billet reheating temperature of 1, 000°C and a finish rolling temperature of 850°C, thereby producing a wire rod having a diameter of 14 mmφ. At this time, an average cooling rate after the finish rolling was set at 2°C/sec. The cooling was performed down to 600°C at this rate. The microstructures of respective wire rods after the rolling were shown in Tables 3 and 4 below. The obtained rolled material was immersed in a hydrochloric acid bath and a sulfuric acid bath to perform a descaling treatment, followed by a lime coating treatment, then wire-drawing and spheroidizing annealing. Further, after the descaling and coating treatments, finish drawing was carried out to produce a steel wire. At this time, the spheroidizing annealing conditions were as follows: soaking temperature of 760°C; soaking time of 5 hours; average cooling rate after soaking of 13°C/hr; and extraction temperature of 685°C. Note that parts represented by "-" in Tables 1 and 2 mean "not added", while parts represented by "tr." mean "less than measurable limit".

[Table 1]

| Steel type | Chemical composition* (% by mass) | | | | | | | | | | | |
|---|---|---|---|---|---|---|---|---|---|---|---|---|
| | C | Si | Mn | P | S | Cr | Ti | Nb | Al | N | B | Others |
| A | 0.34 | 1.54 | 1.00 | 0.020 | 0.016 | 0.51 | 0.052 | - | 0.023 | 0.0032 | 0.0020 | - |
| B | 0.32 | 1.80 | 0.55 | 0.011 | 0.010 | 1.20 | - | 0.050 | 0.041 | 0.0120 | 0.0013 | - |
| C | 0.25 | 1.75 | 0.71 | 0.010 | 0.015 | 0.15 | 0.050 | - | 0.021 | 0.0040 | 0.0018 | - |
| D | 0.24 | 2.01 | 0.73 | 0.009 | 0.013 | 0.54 | 0.030 | 0.025 | 0.025 | 0.0080 | 0.0015 | Ni:0.62 |
| E | 0.33 | 1.71 | 0.33 | 0.015 | 0.014 | 0.70 | 0.055 | - | 0.024 | 0.0046 | 0.0019 | Ni:0.35 |
| F | 0.34 | 1.78 | 1.35 | 0.009 | 0.013 | 0.27 | 0.080 | 0.055 | 0.030 | 0.0069 | 0.0022 | Cu:0.25, Ni:0.50 |
| G | 0.25 | 1.52 | 0.21 | 0.008 | 0.014 | 1.45 | 0.068 | 0.029 | 0.047 | 0.0081 | 0.0035 | Sn:0.10 |
| H | 0.27 | 2.31 | 1.05 | 0.015 | 0.010 | 0.33 | 0.086 | - | 0.028 | 0.0052 | 0.0021 | Mo:0.18 |
| I | 0.20 | 2.07 | 0.34 | 0.015 | 0.013 | 0.98 | 0.084 | - | 0.029 | 0.0030 | 0.0040 | Zr:0.10 |
| J | 0.37 | 2.26 | 1.09 | 0.018 | 0.015 | 0.78 | - | 0.077 | 0.030 | 0.0045 | 0.0020 | Mg:0.0011, Ca:0.0010 |
| K | 0.21 | 1.85 | 0.41 | 0.013 | 0.011 | 0.30 | 0.042 | 0.056 | 0.025 | 0.0037 | 0.0018 | V:0.050 |
| L | 0.38 | 1.62 | 0.21 | 0.012 | 0.015 | 1.21 | - | 0.095 | 0.017 | 0.0042 | 0.0014 | V:0.053 |
| *Balance: Iron and inevitable impurities other than P and S | | | | | | | | | | | | |

[Table 2]

| Steel type | Chemical composition* (% by mass) | | | | | | | | | | | |
|---|---|---|---|---|---|---|---|---|---|---|---|---|
| | C | Si | Mn | P | S | Cr | Ti | Nb | Al | N | B | Others |
| A1 | 0.14 | 1.65 | 0.88 | 0.009 | 0.011 | 1.03 | 0.091 | 0.071 | 0.029 | 0.0187 | 0.0013 | V:0.075 |
| B1 | 0.45 | 2.34 | 1.32 | 0.014 | 0.011 | 1.30 | 0.074 | - | 0.046 | 0.0103 | 0.0030 | Ni:0.23 |
| C1 | 0.23 | 1.27 | 0.55 | 0.015 | 0.014 | 1.07 | 0.085 | - | 0.054 | 0.0048 | 0.0017 | - |
| D1 | 0.34 | 2.78 | 1.24 | 0.007 | 0.010 | 1.05 | 0.033 | 0.048 | 0.017 | 0.0085 | 0.0024 | - |
| E1 | 0.32 | 2.14 | tr. | 0.008 | 0.015 | 1.23 | 0.050 | - | 0.012 | 0.0050 | 0.0020 | Zr:0.11 |
| F1 | 0.37 | 2.02 | 1.86 | 0.008 | 0.014 | 0.52 | 0.050 | - | 0.023 | 0.0062 | 0.0025 | - |
| G1 | 0.35 | 1.61 | 1.11 | 0.035 | 0.021 | 0.77 | 0.049 | - | 0.025 | 0.0045 | 0.0021 | - |
| H1 | 0.28 | 1.80 | 0.95 | 0.022 | 0.035 | 0.81 | - | 0.081 | 0.030 | 0.0081 | 0.0019 | - |
| I1 | 0.34 | 1.82 | 1.01 | 0.015 | 0.016 | 0.02 | 0.051 | - | 0.025 | 0.0049 | 0.0018 | Cu:0.10, Ni:0.22 |
| J1 | 0.23 | 2.46 | 0.81 | 0.009 | 0.010 | 1. 87 | 0.092 | 0.034 | 0.035 | 0.0049 | 0.0022 | - |
| K1 | 0.33 | 1.87 | 1.33 | 0.015 | 0.012 | 0.65 | - | - | 0.032 | 0.0034 | 0.0025 | - |
| L1 | 0.34 | 2.26 | 1.31 | 0.010 | 0.014 | 0.64 | 0.124 | - | 0.036 | 0.0057 | 0.0017 | - |
| M1 | 0.34 | 1.73 | 0.66 | 0.014 | 0.010 | 0.05 | - | - | 0.027 | 0.0040 | 0.0018 | Sn:0.15 |
| N1 | 0.30 | 1.80 | 0.72 | 0.010 | 0.015 | 1.11 | - | 0.117 | 0.026 | 0.0111 | 0.0017 | - |
| O1 | 0.35 | 1.58 | 0.43 | 0.014 | 0.013 | 0.05 | - | 0.064 | - | 0.0120 | 0.0025 | V:0.050 |
| P1 | 0.25 | 1.50 | 0.70 | 0.011 | 0.010 | 0.16 | - | 0.050 | 0.124 | 0.0064 | 0.0020 | Mo:0.20 |
| Q1 | 0.27 | 1.68 | 0.54 | 0.011 | 0.008 | 1.25 | 0.033 | 0.051 | 0.053 | 0.0014 | 0.0020 | - |
| R1 | 0.32 | 1.58 | 0.46 | 0.008 | 0.014 | 1.15 | - | 0.074 | 0.030 | 0.0238 | 0.0019 | - |
| *Balance: Iron and inevitable impurities other than P and S | | | | | | | | | | | | |

The obtained steel wire was subjected to cold heading using a multistage former, thereby producing a flange bolt with M12 mm x 1.25 Pmm and 100 mm length L. Here, M means a diameter of a shaft part, and P means a pitch. The cold forgeability of the bolt in each sample was evaluated based on the presence or absence of a crack at a flange part. With regard to the cold forgeability, samples having no cracks are rated as "OK", while samples having any crack are rated as "NG".

Thereafter, quenching and tempering were carried out on the conditions shown in Tables 3 and 4 below. Other conditions for quenching and tempering were set as follows: heating time for quenching of 20 minutes; a furnace atmosphere of quenching at the atmosphere; cooling conditions for quenching of oil-cooling at 25°C; and a heating time for tempering of 45 minutes.

Regarding the bolts undergoing the quenching and tempering, the grain size of the shaft part, tensile strength, corrosion resistance, delayed fracture resistance, and G value were evaluated in the following ways.

(1) Measurement of Austenite Grain Size Number

[0059] The shaft part of the bolt in each sample was cut along a section perpendicular to the shaft of the bolt. A region in any area on the section with 0.039 $mm^2$ at the position D/4, where D is a diameter of the shaft part, was observed with a light microscope (at a magnification of 400X) to measure a prior austenite grain size number of the region according to "Steels-Micrographic Determination of The Apparent Grain Size" defined by JIS G 0551(2006). The section perpendicular to the bolt shaft is called hereinafter a "cross-section". The measurement of the grain size number was performed on four field of views to determine an average of these grain size numbers, which was defined as the austenite grain size number. Note that samples rated as "NG" in terms of the cold forgeability were not subjected to this measurement.

(2) Measurement of Tensile Strength

The tensile strength of the bolt in each sample was determined by a tensile test in accordance with JIS B 1051 (2009). Samples having a tensile strength of 1100 MPa or more were rated as "Pass". Note that samples rated as "NG" in terms of the cold forgeability were not subjected to this measurement.

(3) Evaluation of Corrosion Resistance

The corrosion resistance of the bolt in each sample was evaluated by immersing the bolt into an aqueous 15% HCl solution for 30 minutes and measuring a decrease in the mass (% by mass) of the bolt after the immersion due to corrosion, compared to the mass before the immersion. Samples having a decrease in the mass due to corrosion of less than 0.05% by mass were rated as "Pass". Note that samples rated as "NG" in terms of the cold forgeability and samples having the tensile strength of less than 1100 MPa were not subjected to this measurement.

```
Decrease in mass due to corrosion = [(mass before acid

immersion - mass after acid immersion)/mass before acid

immersion] x 100
```

(4) Evaluation of Delayed Fracture Resistance

The delayed fracture resistance of the bolt in each sample was evaluated by fastening the bolt by a jig toward the yield point and then repeating 10 cycles of processes on the bolt. Each cycle involves (a) immersing the bolt together with the jig into 1% HCl for 15 minutes, (b) exposing the bolt to the atmosphere for 24 hours, and (c) confirming the presence or absence of fracture in the bolt. Regarding each sample, ten bolts were evaluated. Samples having no fracture in their bolts were rated as "OK", while samples having any fracture even in one of their bolts were rated as "NG". Note that samples rated as "NG" in terms of the cold forgeability and samples having the tensile strength of less than 1100 MPa were not subjected to this evaluation.

(5) Measurement of G Value

Precipitates formed on the austenite grain boundaries for the bolt in each sample were observed in the following way.

Observation of Precipitates

In observing precipitates formed on the austenite grain boundaries, the shaft part of the bolt in each sample was cut along its cross-section, thereby fabricating a thinned specimen by using a Focused Ion Beam (FIB) Processor (trade name: "FB-2000A", manufactured by HITACHI, Ltd.). Then, three images of austenite grain boundaries for each specimen were taken using a transmission electron microscope (trade name "FEMS-2100F", manufactured by HITACHI, Ltd.) at a magnification of 150000X, followed by image analysis. Then, the length and thickness of each precipitate formed on the grain boundary was calculated. Note that the term "length of the precipitate" as used herein means a length of the precipitate in the direction parallel to the austenite grain boundary. The term "thickness of the precipitate" as used herein means a length of the precipitate in the direction perpendicular to the austenite grain boundary.
Then, the total length (L) that was calculated by summing the lengths of the precipitates, each having a thickness of 50 nm or more, formed on the austenite grain boundaries, was divided by the length (L0) of the austenite grain boundary. The result value was expressed as a percentage to determine an occupancy rate (G value) of the precipitates on the austenite grain boundary. With regard to the three images, the respective G values (%) were determined to calculate an average thereof. The average thereof in each sample is shown in Tables 3 and 4 below.
These results are shown in Tables 3 and 4, together with the quenching and tempering conditions and T (°C) determined by the above-mentioned formula (2).

[Table 3]

| Sample No. | Steel type | Microstructure after rolling | Cold forgeability | Quenching temperature [°C] | Tempering temperature [°C] | T [°C] | Austenite grain size number | Tensile strength [MPa] | Decrease due to corrosion [% by mass] | Delayed fracture resistance | G value [%] |
|---|---|---|---|---|---|---|---|---|---|---|---|
| 1 | A | Ferrite-Pearlite | OK | 880 | 425 | 509 | 8.5 | 1,494 | 0.0403 | OK | 12.5 |
| 2 | A | Ferrite-Pearlite | OK | 960 | 425 | 509 | 7.0 | 1,499 | 0.0415 | OK | 17.4 |
| 3 | A | Ferrite-Pearlite | OK | 880 | 480 | 509 | 8.5 | 1,291 | 0.0411 | OK | 41.3 |
| 4 | B | Ferrite-Pearlite | OK | 880 | 475 | 520 | 9.0 | 1,425 | 0.0186 | OK | 25.2 |
| 5 | C | Ferrite-Pearlite | OK | 880 | 450 | 518 | 9.0 | 1,246 | 0.0381 | OK | 25.4 |
| 6 | D | Ferrite-Pearlite | OK | 880 | 450 | 528 | 9.0 | 1,333 | 0.0426 | OK | 12.9 |
| 7 | E | Ferrite-Pearlite | OK | 880 | 475 | 517 | 9.0 | 1,346 | 0.0327 | OK | 27.2 |
| 8 | F | Ferrite-Pearlite | OK | 880 | 450 | 519 | 12.2 | 1,381 | 0.0284 | OK | 20.7 |
| 9 | G | Ferrite-Pearlite | OK | 880 | 475 | 509 | 10.8 | 1,340 | 0.0134 | OK | 37.4 |
| 10 | H | Ferrite-Pearlite | OK | 880 | 500 | 537 | 10.0 | 1,284 | 0.0417 | OK | 28.0 |
| 11 | I | Ferrite-Pearlite | OK | 930 | 500 | 530 | 10.5 | 1,227 | 0.0264 | OK | 33.8 |
| 12 | J | Ferrite-Pearlite | OK | 900 | 525 | 536 | 9.5 | 1,290 | 0.0352 | OK | 47.2 |
| 13 | K | Ferrite-Pearlite | OK | 930 | 500 | 522 | 10.5 | 1,135 | 0.0457 | OK | 43.8 |
| 14 | L | Ferrite-Pearlite | OK | 930 | 450 | 513 | 9.5 | 1,580 | 0.0248 | OK | 17.0 |

[Table 4]

| Sample No. | Steel type | Microstructure after rolling | Cold forgeability | Quenching temperature [°C] | Tempering temperature [°C] | T [°C] | Austenite grain size number | Tensile strength [MPa] | Decrease due to corrosion [% by mass] | Delayed fracture resistance | G value [%] |
|---|---|---|---|---|---|---|---|---|---|---|---|
| 15 | B | Ferrite-Pearlite | OK | 880 | 550 | 520 | 9.0 | 1,179 | 0.0197 | NG | 67.3 |
| 16 | A1 | Ferrite-Pearlite | OK | 880 | 500 | 514 | 12.2 | 1,082 | - | - | 56.8 |
| 17 | B1 | Ferrite-Pearlite | OK | 880 | 525 | 538 | 10.0 | 1,352 | 0.0184 | NG | 53.1 |
| 18 | C1 | Ferrite-Pearlite | OK | 880 | 425 | 496 | 10.8 | 1,370 | 0.0228 | NG | 71.5 |
| 19 | D1 | Ferrite-Pearlite | NG | 900 | 450 | 550 | - | - | - | - | 8.4 |
| 20 | E1 | Ferrite-Pearlite | OK | 880 | 500 | 532 | 8.0 | 1,472 | 0.0205 | NG | 25.4 |
| 21 | F1 | Ferrite-Pearlite | OK | 880 | 500 | 528 | 8.0 | 1,298 | 0.0417 | NG | 29.6 |
| 22 | G1 | Ferrite-Pearlite | OK | 880 | 475 | 512 | 9.5 | 1,365 | 0.0361 | NG | 33.8 |
| 23 | H1 | Ferrite-Pearlite | OK | 880 | 475 | 520 | 10.0 | 1,323 | 0.0351 | NG | 31.3 |
| 24 | I1 | Ferrite-Pearlite | OK | 880 | 475 | 521 | 8.5 | 1,274 | 0.0514 | NG | 13.1 |
| 25 | J1 | Ferrite-Pearlite | NG | 880 | 475 | 541 | - | - | - | - | 11.0 |
| 26 | K1 | Ferrite-Pearlite | OK | 900 | 425 | 523 | 7.0 | 1,550 | 0.0376 | NG | 18.9 |
| 27 | L1 | Ferrite-Pearlite | NG | 900 | 500 | 536 | - | - | - | - | 13.3 |
| 28 | M1 | Ferrite-Pearlite | OK | 900 | 450 | 517 | 6.0 | 1,339 | 0.0484 | NG | 14.7 |
| 29 | N1 | Ferrite-Pearlite | NG | 880 | 475 | 520 | - | - | - | - | 24.1 |
| 30 | O1 | Ferrite-Pearlite | NG | 880 | 475 | 511 | - | - | - | - | 21.4 |
| 31 | P1 | Ferrite-Pearlite | NG | 880 | 500 | 508 | - | - | - | - | 41.1 |
| 32 | Q1 | Ferrite-Pearlite | NG | 880 | 425 | 515 | - | - | - | - | 19.8 |
| 33 | R1 | Ferrite-Pearlite | NG | 880 | 500 | 511 | - | - | - | - | 34.0 |

From these results, the following consideration can be made. Samples No. 1 to 14 are inventive examples that satisfied the requirements specified by the present invention, and are found to exhibit excellent delayed fracture resistance while having excellent cold forgeability and high strength.

In contrast, samples No. 15 to 33 are examples that did not satisfy any one of the requirements specified by the present invention and are inferior in any one of the properties. That is, in the sample No. 15, a tempering temperature became higher, the G value increased, and the delayed fracture resistance was degraded.

The sample No. 16 used a steel of the type A1 that had a small C content, thus failing to ensure the tensile strength of 1,100 MPa or more.

The sample No. 17 used a steel of the type B1 that had an excessive C content, thus reducing the toughness and ductility, thereby degrading the delayed fracture resistance.

The sample No. 18 used a steel of the type C1 that had a small Si content, thereby producing a large amount of coarse precipitates, leading to an increase in the G value, while degrading the delayed fracture resistance.

The sample No. 19 used a steel of the type D1 that had a large Si content, thus degrading the cold forgeability.

The sample No. 20 used a steel of the type E1 that had a small Mn content, thereby producing a large amount of ferric sulfide (FeS), thus degrading the delayed fracture resistance.

The sample No. 21 used a steel of the type F1 that had a large Mn content, thereby reducing the toughness and ductility, thus degrading the delayed fracture resistance.

The sample No. 22 used a steel of the type G1 that had a large P content, whereby P was concentrated on the grain boundaries, reducing the toughness and ductility, thereby degrading the delayed fracture resistance.

The sample No. 23 used a steel of the type H1 that had a large S content, whereby like the sample No. 22, S was concentrated on the grain boundaries, reducing the toughness and ductility, thereby degrading the delayed fracture resistance.

The sample No. 24 used a steel of the type I1 that had a small Cr content, thus reducing the corrosion resistance, while degrading the delayed fracture resistance.

The sample No. 25 used a steel of the type J1 that had a large Cr content, thus forming coarse precipitates, degrading the cold forgeability.

The samples No. 26 and No. 28 used steel of the type K1 or M1 that contained neither Ti nor Nb, thus coarsening crystal grains in each case, degrading the delayed fracture resistance.

The sample No. 27 used a steel of the type L1 that had a large Ti content, thus forming coarse carbonitrides, degrading the cold forgeability.

The sample No. 29 used a steel of the type N1 that had a large Nb content, thus forming coarse carbonitrides, degrading the cold forgeability.

The sample No. 30 used a steel of the type O1 that did not contain Al, thus coarsening ferrite crystal grains in rolling, degrading the cold forgeability.

The sample No. 31 used a steel of the type P1 that had a large Al content, thus forming coarse nitrides, degrading the cold forgeability.

The sample No. 32 used a steel of the type Q1 that had a small N content, thus failing to sufficiently form nitrides, which would be supposed to coarsen the crystal grains, thus degrading the cold forgeability.

The sample No. 33 used a steel of the type R1 that had a large N content, which would be supposed to increase the amount of N in a solid-solution state, thus degrading the cold forgeability.

**Claims**

1. A steel for bolts, comprising, in percent by mass:

   0.20 to 0.40% of C;
   1.5 to 2.5% of Si;
   0.20 to 1.5% of Mn;
   more than 0% and 0.03% or less of P;
   more than 0% and 0.03% or less of S;
   0.05 to 1.5% of Cr;
   0.01 to 0.10% of Al;
   0.0003 to 0.01% of B;
   0.002 to 0.020% of N; and

   one or two elements selected from the group consisting of:

0.02 to 0.10% of Ti; and

0.02 to 0.10% of Nb;

with the balance being iron and inevitable impurities.

2. The steel for bolts according to claim 1, further comprising one or more elements belonging to any one of following (a) to (c) :

(a) one or more elements selected from the group consisting of more than 0% and 0.5% or less of Cu, more than 0% and 1.0% or less of Ni, and more than 0% and 0.5% or less of Sn;
(b) more than 0% and 1.5% or less of Mo; and
(c) one or more elements selected from the group consisting of more than 0% and 0.5% or less of V, more than 0% and 0.5% or less of W, more than 0% and 0.3% or less of Zr, more than 0% and 0.01% or less of Mg, and more than 0% and 0.01% or less of Ca.

3. A bolt having the chemical composition according to claim 1 or 2, and also satisfies a relationship given by the following formula (1) :

$$(L/L0) \times 100 \leq 60 \qquad (1)$$

where L is a total length of precipitates, each having a thickness of 50 nm or more, formed in an austenite grain boundary, and L0 is a length of the austenite grain boundary.

4. The bolt according to claim 3, which does not include a layer subjected to a nitriding treatment on a surface.

5. The bolt according to claim 3, which has an austenite grain size number of 8 or more.

6. The bolt according to claim 4, which has an austenite grain size number of 8 or more. 37

**INTERNATIONAL SEARCH REPORT**

| International application No. |
|---|
| PCT/JP2015/075416 |

A. CLASSIFICATION OF SUBJECT MATTER
*C22C38/00*(2006.01)i, *C22C38/34*(2006.01)i, *C22C38/54*(2006.01)i, *F16B35/00*(2006.01)i, *C21D8/06*(2006.01)n, *C21D9/00*(2006.01)n

According to International Patent Classification (IPC) or to both national classification and IPC

B. FIELDS SEARCHED

Minimum documentation searched (classification system followed by classification symbols)
C22C38/00-C22C38/60, F16B35/00, C21D8/06, C21D9/00

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-15664 A (Kobe Steel, Ltd.),<br>30 January 2014 (30.01.2014),<br>claims; 0001, 0031, 0039 to 0046<br>(Family: none) | 1,2<br>3-6 |
| X<br>Y<br>A | JP 2013-227647 A (Kobe Steel, Ltd.),<br>07 November 2013 (07.11.2013),<br>claims; 0001, 0040 to 0049<br>& US 2015/0053315 A1<br>0001, 0057 to 0071; claims<br>& WO 2013/145868 A1    & EP 2832875 A1<br>& TW 201348460 A       & CA 2864453 A1<br>& KR 10-2014-0123111 A  & CN 104204254 A<br>& MX 2014011470 A | 2<br>3-6<br>1 |

| [×] Further documents are listed in the continuation of Box C. | [ ] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 December 2015 (01.12.15) | Date of mailing of the international search report<br>08 December 2015 (08.12.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (July 2009)

**INTERNATIONAL SEARCH REPORT**

International application No.

PCT/JP2015/075416

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2007-191764 A (Kobe Steel, Ltd.),<br>02 August 2007 (02.08.2007),<br>table 1; 0053, 0066<br>& US 2009/0035602 A1<br>table 1; table 1-continued; 0078, 0090<br>& WO 2007/083604 A1 & EP 1985720 A1<br>& ES 2472275 T3 | 2<br>1,3-6 |
| Y<br>A | JP 2006-233326 A (Kobe Steel, Ltd., Shinshu<br>TLO Co., Ltd.),<br>07 September 2006 (07.09.2006),<br>0001, 0031 to 0036<br>& US 2006/0169366 A1<br>0002, 0039 to 0042<br>& EP 1686194 A1 & KR 10-2006-0087437 A<br>& CN 1811001 A | 2<br>1,3-6 |
| Y<br>A | JP 10-17985 A (Kobe Steel, Ltd.),<br>20 January 1998 (20.01.1998),<br>claims; 0001, 0007 to 0009, 0024 to 0028, 0035;<br>table 2<br>(Family: none) | 3-6<br>1,2 |
| A | JP 55-2785 A (Sumitomo Metal Industries, Ltd.),<br>10 January 1980 (10.01.1980),<br>claims; page 1, lower right column, line 6 to<br>page 2, upper left column, line 18; page 4,<br>upper right column, lines 11 to 14<br>(Family: none) | 1-6 |
| A | JP 2012-162798 A (Kobe Steel, Ltd.),<br>30 August 2012 (30.08.2012),<br>& WO 2012/098938 A1 | 1-6 |
| A | JP 2012-41587 A (Nippon Steel Corp.),<br>01 March 2012 (01.03.2012),<br>& US 2013/0133789 A1 & WO 2012/023483 A1<br>& CN 103080353 A & KR 10-2013-0034045 A<br>& MX 2013001724 A | 1-6 |
| A | JP 6-306543 A (Nippon Steel Corp.),<br>01 November 1994 (01.11.1994),<br>(Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011111872 A
- JP 2009299180 A
- JP 2009299181 A
- JP 2014201945 A